# EUROPÄISCHE PATENTSCHRIFT

(11) **EP 3 257 645 B1**
(45) Veröffentlichungstag und Bekanntmachung des Hinweises auf die Patenterteilung: **02.10.2019**
(21) Anmeldenummer: 17175257.9
(22) Anmeldetag: 09.06.2017
(51) Int. Cl.: B29C 33/00, B29C 70/30, B29C 70/00, B29D 99/00, B29L 31/08

(54) **HERSTELLUNGSFORM EINES ROTORBLATTES MIT EINEM FLUCHTWEG**
A PRODUCTION MOLD OF A ROTOR BLADE COMPRISING AN ESCAPE PATH
MOULE DE FABRICATION D'UNE PALE DE ROTOR AVEC UNE VOIE DE FUITE

(30) Priorität: 16.06.2016 DE 102016007304
(43) Veröffentlichungstag der Anmeldung: 20.12.2017
(73) Patentinhaber: Senvion GmbH, 22297 Hamburg (DE)
(72) Erfinder: BENDEL, Urs, 24787 Fockbek (DE)
(74) Vertreter: Groth, Wieland

(56) Entgegenhaltungen:
- DE-U1-202010 014 682
- DE-U1-202012 100 794
- Ausschuss Für Arbeitsstätten: "Technische Regeln für Arbeitsstätten - Fluchtwege und Notausgänge, Flucht- und Rettungsplan", , 31. August 2007 (2007-08-31), XP055396823, Gefunden im Internet: URL:https://www.baua.de/DE/Angebote/Rechts texte-und-Technische-Regeln/Regelwerk/ASR/ pdf/ASR-A2-3.pdf?__blob=publicationFile [gefunden am 2017-08-08]
- Anonymous: "Effiziente Herstellung von Windkraftanlagen | Kunststoffe.de", , 10. Dezember 2015 (2015-12-10), XP055396830, Gefunden im Internet: URL:https://www.kunststoffe.de/produkte/ue bersicht/beitrag/effizientere-herstellung- von-windkraftanlagen-45-meter-langer-holmg urt-aus-polyurethan-1273740.html [gefunden am 2017-08-08]

## Beschreibung

Die Erfindung betrifft eine Herstellungsform nach dem Oberbegriff des Anspruchs 1.

Rotorblätter werden üblicherweise aus separat gefertigten Bauteilen, wie Rotorblatthalbschalen, Gurten und Stegen, zusammengesetzt. Die separaten Bauteile werden in für sie individuell bestimmten Herstellungsformen gefertigt. In die Herstellungsform werden zunächst mehrere Schichten, beispielweise faserhaltige Gewebelagen, Schäume, Balsa usw. übereinander- und/oder nebeneinandergelegt. Die so angeordneten Schichten bilden ein vorzugsweise trockenes Halbzeug aus, es können aber auch andere Herstellungsmethoden in der erfindungsgemäßen Herstellungsform angewendet werden. Die Formschalen selbst können ebenfalls aus einem Faserverbundwerkstoff bestehen. Um Platz in der Fertigungseinrichtung zu sparen, werden die Formschalen so eng wie möglich mit den Längsseiten nebeneinander ausgerichtet aufgestellt. Die Formschalen haben eine offene, im Wesentlichen nach oben ausgerichtete Oberfläche, auf die das Material zum Bau der Rotorblattkomponente aufgebracht wird. Die Rotorblattkomponenten können z. B. sein: Stege, Gurte, Blatthalbschalen oder Segmente davon, sonstige Komponenten.

Im Folgenden wird die erfindungsgemäße Ausbildung der Herstellungsformen am Beispiel der Formen für die Rotorblatthalbschalen erläutert. Die erfindungsgemäße Herstellungsform ist aber nicht auf dieses Beispiel begrenzt, sondern gilt generell für alle Herstellungsformen.

Die beiden Formhalbschalen für die Rotorblatthalbschalen sind im Querschnitt halbkreisförmig, halbellipsenförmig oder ähnlich ausgebildet, wobei die Ausbildung des Querschnitts sehr von der Position des Schnittes in Längsrichtung der Rotorblatthalbschale abhängt. In jedem Fall ist die Formhalbschale nach unten zum Erdboden hin geschlossen und nach oben, erdbodenabseitig, offen. Von der offenen Seite her wird die Formhalbschale mit den Gewebelagen belegt und auch anderweitig bedient.

Die beiden Formhalbschalen liegen in einer Werkhalle nebeneinander, und die beiden Rotorblatthalbschalen können jeweils in einem Stück gefertigt werden. Moderne Rotorblätter können dabei durchaus Längen zwischen 40 und 60 oder 75 Metern oder noch mehr aufweisen. Es ist generell von besonderer Bedeutung, die beiden Rotorblatthalbschalen nach deren separater Fertigung durch einen Klappmechanismus positionsgenau übereinander zu positionieren und Ränder der beiden Rotorblatthalbschalen miteinander zu verkleben. Dazu sind die Formhalbschalen jeweils auf einer Unterkonstruktion, z. B. einem Stahlfachwerk montiert, wobei die beiden Stahlfachwerke Unterkonstruktionen über einen Schwenkmechanismus, der günstigerweise elektrisch, hydraulisch oder pneumatisch ausgebildet ist, miteinander verbunden sind und ein langsames und ein sehr positionsgenaues Verschwenken der klappbaren Formhalbschale auf die positionsfeste Formhalbschale ermöglichen. Bevor sich die beiden Rotorblatthalbschalen berühren, wird ein Rand einer Rotorblatthalbschale, bevorzugt der Rand der positionsfesten Rotorblatthalbschale, mit einem Klebstoff bestrichen, und erst dann wird die klappbare Rotorblatthalbschale mit ihrem Rand auf die positionsfeste Rotorblatthalbschale gedrückt.

In der DE 20 2010 014 682 U1 ist eine Herstellungsform für zwei Rotorblatthalbschalen offenbart, die mittels eines Schwenkmechanismus aufeinanderklappbar sind.

In der DE 20 2012 100 794 U1 ist eine Fertigungsvorrichtung für ein Laminatbauteil eines Rotorblattes einer Windkraftanlage offenbart, wobei ein Leitungssystem für ein Wärmemedium mit einem Sonnenlichtkollektor verbunden ist, der die Auflagefläche der Fertigungsform für ein Infusionsverfahren vorwärmt.

Die Rotorblätter können am wurzelseitigen Ende Durchmesser von zwei bis sechs Metern oder sogar mehr aufweisen, darüber hinaus werden die Rotorblätter in einer besonders vorteilhaften Ausbildung in Richtung der aerodynamischen Druckseite, die im Produktionsbetrieb die im Wesentlichen vom Turm abgewandte Seite des Rotorblattes darstellt, vorgebogen, um den geometrischen Abstand des unbelasteten Blattes zur Turmwandung zu vergrößern.

Das führt dazu, dass die beiden Formhalbschalen im aufgeklappten Zustand mit ihren bodenseitigen Enden entlang einer Längsrichtung sehr unterschiedliche Höhen über dem Boden aufweisen. Der mittlere Bereich der positionsfesten Formhalbschale, die die saugseitige Rotorblatthalbschale aufnimmt, ist lediglich bis zu etwa einem Meter vom Erdboden beabstandet, während die im gleichen Schnitt angeordnete Stelle der klappbaren Formhalbschale drei bis vier Meter über dem Erdboden angeordnet ist. Unter Erdboden ist hier auch ein Hallenboden o. Ä. zu verstehen. Damit die Formhalbschalen zur Fertigung der Rotorblatthalbschalen auch von innen bedient werden können, sind entlang der Längsseiten, aber auch entlang der Tipseite und entlang der Wurzelseite, Laufgestelle vorgesehen, auf denen Laufwege verlegt sind. Die Laufwege können aus Gerüstbrettern oder Stahlrosten bestehen. Da die beiden Formhalbschalen in Längsrichtung mit ihren inneren Längsseiten nebeneinander positioniert sind und zumindest ein Laufweg innenseitig zwischen den beiden innenseitigen Rotorblatthalbschalen, möglicherweise auch zwei Laufwege vorgesehen sind, kann im Gefahrenfall, wie beispielsweise bei Feuer, für Arbeiter, die sich in Längsrichtung etwa mittig auf dem innenseitigen Laufweg befinden, eine lebensbedrohliche Situation entstehen.

Es ist daher Aufgabe der vorliegenden Erfindung, eine gegenüber dem Stand der Technik verbesserte Herstellungsform zur Verfügung zu stellen, die insbesondere sicherer ist.

Die Aufgabe wird durch eine eingangs genannte Herstellungsform mit den Merkmalen des Anspruchs 1 gelöst.

Die erfindungsgemäße Herstellungsform zur Herstellung eines Rotorblattes einer Windenergieanlage umfasst zwei Formhalbschalen, vorzugsweise mit jeweils einer offenen Seite. Die beiden Formhalbschalen sind während der Dauer des Herstellungsverfahrens des Rotorblattes wenigstens zeitweise nebeneinander stehend angeordnet. Zwischen den beiden nebeneinander stehenden Formhalbschalen verläuft ein innerer Laufweg. Von dem inneren Laufweg aus werden die beiden Formhalbschalen durch Personal bearbeitet. Erfindungsgemäß ist ein Fluchtweg für das auf dem inneren Laufweg arbeitende Personal vorgesehen, der vom inneren Laufweg ausgehend unter einer der beiden oder beiden Formhalbschalen hindurch vorzugsweise aus einem Bereich der Herstellungsform heraus verläuft. Durch die Anordnung unter einer der beiden Formhalbschalen hindurch ist der Fluchtweg verhältnismäßig kurz ausgebildet.

Günstigerweise sind die beiden Formhalbschalen jeweils in einer Halteeinrichtung angeordnet, die in Form einer Unterkonstruktion ausgebildet ist. Die beiden Halteeinrichtungen sind gelenkig miteinander verbunden, wobei die gelenkige Verbindung insbesondere elektrisch, hydraulisch oder pneumatisch ausgebildet ist und zentral über eine Leitstelle gesteuert werden kann.

Die beiden Halteeinrichtungen sind zwischen einer geöffneten Position, in der die beiden Formhalbschalen mit ihrer offenen Seite nach oben weisend nebeneinander angeordnet sind, und einer geschlossenen Position, in der die beiden Formhalbschalen mit ihrer offenen Seite zueinander weisend übereinander angeordnet sind, hin und her klappbar. Dabei werden die beiden Formhalbschalen vorzugsweise über ihre inneren Längsseiten, die entlang der aerodynamischen Vorderkante des Rotorblattes verlaufen, geklappt.

Im geöffneten Zustand ist zwischen den beiden Formhalbschalen wenigstens ein innerer Laufweg angeordnet, von dem aus eine der beiden Formhalbschalen, vorzugsweise beide Formhalbschalen bedienbar sind. Erfindungsgemäß sind in dem einen inneren Laufweg wenigstens eine Personenöffnung vorgesehen und ein Fluchtweg, der unter einer der beiden Formhalbschalen entlang verläuft und der von der wenigstens einen Personenöffnung aus begehbar ist.

Die Erfindung macht von der Idee Gebrauch, einen zusätzlichen Fluchtweg zur Verfügung zu stellen, der über eine Personenöffnung in dem oder von diesem aus direkt erreichbaren inneren Laufweg begehbar ist. Unter dem inneren Laufweg wird hier insbesondere ein begehbarer Weg verstanden, der aus Gerüstbrettern, Stahlrosten oder Ähnlichem besteht und entlang einer Oberseite eines Laufgestells angeordnet ist. Im in Längsrichtung etwa mittig angeordneten Abschnitt des Laufweges ist eine Öffnung im inneren Laufweg vorgesehen, die eine Öffnungsweite aufweist, sodass ein Arbeiter bequem durch diese Personenöffnung hindurchsteigen kann, also etwa eine Öffnungsweite von 50 - 100 Zentimetern aufweist; die Personenöffnung kann rechteckig, quadratisch oder kreisförmig, auch elliptisch oder anderswie ausgebildet sein. Während des Fertigungsverfahrens des Rotorblattes bzw. der beiden Rotorblatthalbschalen ist die Personenöffnung durch eine Klappe verschlossen, die Klappe kann um ein Gelenk verschwenkbar sein, sie kann aber auch, und diese Ausführungsform ist bevorzugt, verschiebbar im Laufweg angeordnet sein und über einen seitlich am Geländer des Laufweges angeordneten Notschalter elektrisch oder über eine Mechanik manuell bedient werden.

Vorzugsweise verbindet der Fluchtweg die Personenöffnungen z. B. über eine Leiter, eine Treppe o. Ä. und einen Gang mit einer äußeren Längsseite einer der beiden Haltevorrichtungen. Er verläuft also vorzugsweise zur aerodynamischen Hinterkante des Rotorblattes. Dadurch ist der Fluchtweg von der Personenöffnung in die Montagehalle hinein besonders kurz, da lediglich die kurze Breite einer Formhalbschale unterlaufen werden muss.

Besonders bevorzugt verbleibt eine Formhalbschale während des Klappens positionsfest auf dem Boden, und eine klappbare Formhalbschale ist aus der geöffneten Position in die geschlossene Position klappbar, wobei der Fluchtweg innerhalb der Unterkonstruktion der klappbaren Formhalbschale hindurchgeführt wird.

Besonders bevorzug wird diejenige Formhalbschale positionsfest angeordnet, die die aerodynamische Saugseite des Rotorblattes abbildet, da bei dieser Formhalbschale die Unterkonstruktion eine deutlich geringere Bauhöhe und damit eine geringere Steifigkeit aufweist als diejenige der Formhalbschale, die die aerodynamische Druckseite des Rotorblattes abbildet, die sich insbesondere bei geometrisch vorgebogenen Rotorblättern durch eine sehr große Bauhöhe und damit Steifigkeit auszeichnet.

Moderne Rotorblätter können Längen von 40 bis 75 Metern aufweisen, zukünftig werden voraussichtlich noch längere Rotorblätter gefertigt. Die Rotorblätter weisen ein tipseitiges und ein wurzelseitiges Ende auf, wobei die Rotorblätter vorzugsweise, ausgehend vom wurzelseitigen Ende, im Wesentlichen senkrecht zur Sehnenlinie des Profils in Richtung der aerodynamischen Druckseite geometrisch vorgebogen sind. Die Rotorblätter werden aus einer saugseitigen und einer druckseitigen Rotorblatthalbschale zusammengesetzt. Beim Nebeneinanderliegen der Rotorblatthalbschalen mit ihrer offenen Seite nach oben ist die druckseitige Rotorblatthalbschale im in Längsrichtung gesehen mittleren Abschnitt nach oben gebogen und die druckseitige Rotorblatthalbschale nach unten gebogen. Die saugseitige Rotorblatthalbschale weist einen deutlich geringeren Abstand über dem Boden auf als die druckseitige Rotorblatthalbschale. Daher ist es sinnvoll, den Fluchtweg unter der im mittleren Bereich weiter nach oben gewölbten Formhalbschale hindurchzuführen. Diese entspricht üblicherweise der druckseitigen Rotorblatthalbschale, da diese im aufgeschnittenen Zustand deutlich biegesteifer ist als die saugseitige Rotorblatthalbschale und daher leichter und mit einer spezifisch geringeren Verformung die beim Klappen der Formschalenhälfte auftretenden Kräfte ertragen kann.

Zweckmäßigerweise sind die Halteeinrichtungen als Fachwerk, günstigerweise als Stahlfachwerk, besonders günstig als Rohrstahlfachwerk ausgebildet. Die Stahlrohre können mittels Klemmen miteinander fest verbunden sein, oder sie werden miteinander verschraubt oder verschweißt.

Es ist jedoch auch denkbar, dass die Halteeinrichtungen aus einer Holz- oder Kunststofffachwerkkonstruktion gebildet werden. Es ist auch vorgesehen, dass die Halteeinrichtungen aus vollflächigen Wänden ausgebildet sind, die durch eine Fachwerkstruktur verstärkt sein können.

Die Herstellungsform kann in einer bevorzugten Ausführungsform der Erfindung zwei oder mehr innere Laufwege aufweisen. Insbesondere wenn die beiden inneren Längsseiten der Formhalbschalen einen großen Abstand voneinander aufweisen, der größer als ein Meter, vorzugsweise größer als 1,50 Meter oder 2 Meter ist, kann entlang jeder der beiden Formhalbschalen ein innerer Laufweg angeordnet sein. Die mindestens zwei Laufwege können dann mindestens abschnittsweise über zusätzliche Laufwege miteinander verbunden sein.

Jeder der inneren Laufwege weist eine Breite von etwa 50 - 150 Zentimetern auf. Die beiden inneren Laufwege können miteinander über kurze Querwege verbunden sein.

Es ist jedoch auch denkbar, dass die Laufwege nicht miteinander über Querwege verbunden sind.

Insbesondere dann ist es jedoch bevorzugt vorgesehen, dass jeder innere Laufweg eine Personenöffnung aufweist. Von jeder einzelnen Personenöffnung kann eine Person mittels jeweils einer Treppe oder Leiter oder Rutschstange herabsteigen und in den Fluchtweg gelangen. Der Fluchtweg der einen Personenöffnung und der Fluchtweg der anderen Personenöffnung können zusammengeführt sein.

Besonders bevorzugt sind Seitenwände und/oder Decken und Böden des Fluchtweges mit einer feuerfesten oder feuerhemmenden Verkleidung ausgestattet oder direkt aus einem feuerfesten oder feuerhemmenden Material hergestellt, sodass, selbst wenn die Herstellungsform oder die unmittelbare Umgebung des Fluchtweges bereits Feuer gefangen hat, eine sichere Flucht des Arbeiters möglich ist.

Die Erfindung wird anhand eines Ausführungsbeispiels in drei Figuren beschrieben, dabei zeigen:
- Fig. 1: eine Ansicht auf die Wurzel- oder Tipseite einer erfindungsgemäßen Herstellungsform mit vier Laufwegen,
- Fig. 2: eine seitliche Ansicht einer Formhalbschale der Herstellungsform mit den Laufwegen in einer seitlichen Ansicht,
- Fig. 3: eine Draufsicht auf die Herstellungsform mit den vier Laufwegen in einer Draufsicht.

Die Ausführungsformen der Figuren variieren etwas voneinander. Die Figuren sind nicht maßstabsgerecht.

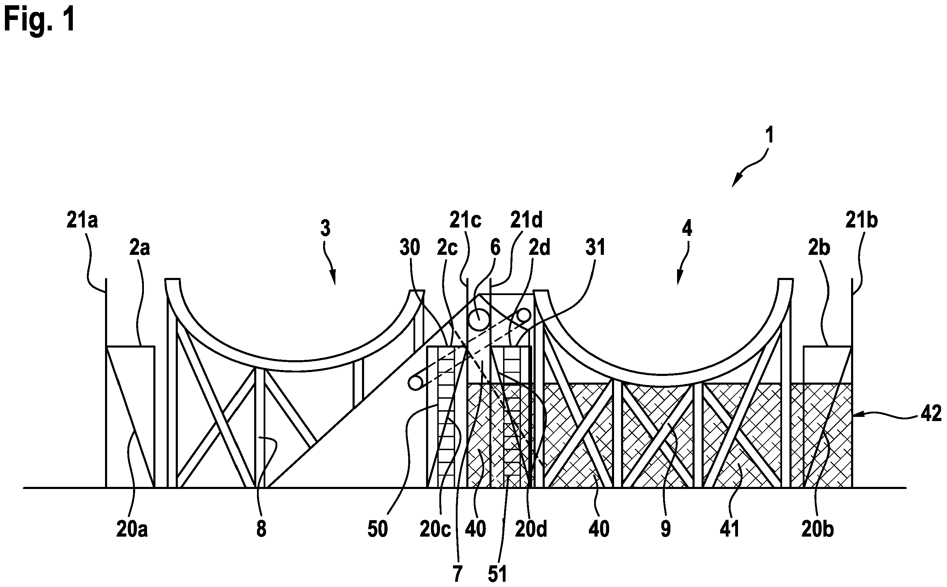

Fig. 1 zeigt eine Herstellungsform 1. Die Herstellungsform 1 umfasst zwei Formhalbschalen 3, 4, von denen eine saugseitige Formhalbschale 3 in Fig. 1 links angeordnet ist und positionsfest auf einem Boden einer Montagehalle positioniert ist, während eine andere druckseitige Formhalbschale 4 in Fig. 1 rechts neben der saugseitigen Formhalbschale 3 angeordnet ist und über Gelenke 6 und einen hydraulischen Klappmechanismus 7 aus der in Fig. 1 dargestellten geöffneten Stellung in eine geschlossene Stellung überführt werden kann, indem die saugseitige Formhalbschale 4 entgegen dem Uhrzeigersinn um die Gelenke 6 geschwenkt wird. Die druckseitige Formhalbschale 4 ist klappbar, die saugseitige Formhalbschale 3 ist positionsfest während des Klappvorgangs.

Die Begriffe saugseitig und druckseitig beziehen sich dabei auf ein Rotorblatt, das in herkömmlicher Weise eine aerodynamische Saug- und eine aerodynamische Druckseite aufweist. Die Bezeichnungen übertragen sich entsprechend auch auf die jeweiligen Formhalbschalen 3, 4.

Entlang von Rändern der beiden Formhalbschalen 3, 4 sind Laufwege für Arbeiter angeordnet, zwei seitliche äußere Laufwege 2a, 2b und zwei innere Laufwege 2c, 2d. Die seitlichen äußeren Laufwege 2a, 2b verlaufen entlang den im geöffneten Zustand der Herstellungsform voneinander am weitesten beabstandeten Längsseiten der Formhalbschalen 3, 4, während die inneren Laufwege 2c, 2d zwischen den beiden aufgeklappten Formhalbschalen 3, 4 jeweils entlang eines Randes einer der beiden Formhalbschalen 3, 4 verlaufen.

Sowohl die eine als auch die andere Formhalbschale 3, 4 sind jeweils einstückige Laminatbauteile, in denen jeweils eine Rotorblatthalbschale in einem Laminierverfahren gefertigt werden kann. Wobei der Begriff einstückig hier auch die Konstellation umfassen soll, dass die Formhalbschalen 3, 4 in einem ersten Schritt in Segmenten gebaut werden und diese Segmente in einem zweiten Schritt in einer geeigneten Weise miteinander zu der einen Formhalbschale 3, 4 verbunden werden.

Die Formhalbschalen 3, 4 können aus Kunststoffen, aber grundsätzlich auch aus anderen Materialien wie Holz, Aluminium oder Stahl bestehen.

Nachdem die beiden (nicht dargestellten) Rotorblatthalbschalen in den beiden Formhalbschalen 3, 4 gefertigt sind, wird auf Rotorblatthalbschalenränder, die die jeweilige Rotorblatthalbschale bis auf die Rotorblattwurzel umlaufen, eine Klebmittelschicht aufgetragen. Vorzugsweise ist die Klebmittelschicht auf den Rotorblatthalbschalenrand der Rotorblatthalbschale der positionsfesten Formhalbschale 3 aufgetragen.

Dann wird die klappbare Formhalbschale 4 im Uhrzeigersinn in Fig. 1 auf die positionsfeste Formhalbschale 3 geklappt, sodass die beiden Formhalbschalen 3, 4 unmittelbar übereinander positioniert sind. Die beiden Ränder der Rotorblatthalbschalen werden dadurch ebenfalls übereinander geklappt, bis die Klebmittelschicht Kontakt mit beiden Rotorblatthalbschalenrändern hat. Dann wird die klappbare Formhalbschale 4 so weit auf die positionsfeste Formhalbschale 3 gedrückt, bis eine vorbestimmte Spaltbreite zwischen den beiden Rändern der Rotorblatthalbschale hergestellt ist. Der Spalt ist günstigerweise vollständig mit dem Klebmittel ausgefüllt.

Im geöffneten Zustand der Herstellungsform 1 gemäß Fig. 1 sind die beiden Formhalbschalen 3, 4 quer zu einer Längsrichtung L parallel zueinander, vorzugsweise parallel nebeneinander positioniert, jede der beiden Formhalbschalen 3, 4 ist in diesem Ausführungsbeispiel auf einem Stahlfachwerk 8, 9 angeordnet, wobei die positionsfeste Formhalbschale 3 auf einem positionsfesten Stahlfachwerk 8 und die klappbare Formhalbschale 4 auf einem während des Zuklappens zusammen mit der klappbaren Formhalbschale 4 ebenfalls klappbaren Stahlfachwerk 9 fest verbunden ist. Die Formhalbschalen 3, 4 sind mit ihrem jeweiligen Stahlfachwerk 8, 9 relativ positionsfest und dauerhaft verbunden.

Die Formhalbschalen 3, 4 weisen jeweils eine, sich unmittelbar gegenüberliegende, innere Längsseite und jeweils eine äußere Längsseite auf. Die beiden inneren Längsseiten und die beiden äußeren Längsseiten liegen nach dem Zuklappen der Herstellungsform 1 direkt übereinander. Die beiden inneren Längsseiten der beiden Rotorblatthalbschalen bilden nach dem Zusammenklappen der Herstellungsformen 1 die aerodynamische Nase oder Vorderkante des Rotorblattes aus und die beiden äußeren Längsseiten der Rotorblatthabschalen bilden nach dem Zusammenklappen der Herstellungsform 1 die aerodynamische Hinterkante des Rotorblattes aus.

In der Ausführungsform in Fig. 1 ist entlang der beiden inneren Längsseiten jeweils ein inneres Laufgestell 20c, 20d angeordnet, auf dessen oberem, dem Erdboden abgewandten Ende jeweils einer der beiden inneren Laufwege 2c, 2d vorgesehen ist. Die beiden inneren Laufwege sind dazu bestimmt, die positionsfeste bzw. die klappbare Formhalbschale 3, 4 zu bedienen.

Auf zwei äußeren Laufgestellen 20a, 20b sind erdbodenabseitig die beiden äußeren Laufwege 2a, 2b angeordnet; die Laufwege 2a, 2b, 2c, 2d sind aus Stahlrosten und/oder Gerüstbrettern hergestellt. Die Laufwege 2a, 2b, 2c, 2d verlaufen jeweils unmittelbar entlang des Randes der Formhalbschalen 3, 4, oder in einem geeigneten Abstand dazu, damit ein bequemes Bedienen der Innenseite der Formhalbschalen 3, 4 durch auf den Laufwegen 2a, 2b, 2c, 2d stehende Arbeiter möglich ist.

Die Höhe der Laufwege 2a, 2b, 2c, 2d über dem Erdboden ist entlang der Längsausdehnung jedes einzelnen Laufweges 2a, 2b, 2c, 2d möglicherweise unterschiedlich, da sich die Laufwege dem Höhenverlauf der Außenkanten der Formhalbschalen 3, 4 anpassen. Des Weiteren können die Höhen der Laufwege 2a, 2b, 2c, 2d senkrecht zur Längsrichtung L ebenfalls verschieden voneinander sein, da die Ränder jeder Formhalbschale 3, 4 entlang eines Schnittes senkrecht zur Längsrichtung L eine unterschiedliche Höhe über dem Erdboden aufweisen.

Daher ist es, wie in der Fig. 1 dargestellt, möglich, dass zwei voneinander unabhängige und voneinander beabstandete innere Laufwege 2c, 2d vorgesehen sind, die jeweils entlang eines inneren Randes der positionsfesten bzw. der klappbaren Formhalbschale 3, 4 verlaufen, wobei es jedoch in anderen Ausführungsformen auch denkbar ist, dass nur ein einziger Laufweg zwischen den beiden Formhalbschalen 3, 4 angeordnet ist, der breit genug ist, dass die Innenseiten beider Formhalbschalen 3, 4 von dem einen inneren Laufweg bedient werden können.

Die Laufwege 2a, 2b, 2c, 2d sind vorzugsweise so angeordnet, dass sie am Rand der Formhalbschalen 3, 4 beginnen und die tip- und / oder wurzelseitigen Enden der Formhalbschalen umfassen.

Die Laufwege 2a, 2b, 2c, 2d sind auf den Laufgestellen 20a, 20b, 20c, 20d montiert, wobei es sich bei den Laufgestellen 20a, 20b, 20c, 20d um herkömmliche Bau- oder Malergerüste handeln kann.

Die Länge der Formhalbschalen 3, 4 ist durch die Länge des Rotorblattes bestimmt, das mit Hilfe der beiden Formhalbschalen 3, 4 gefertigt wird. Rotorblätter moderner Windenergieanlagen können durchaus Längen zwischen 40 und 65 Metern, teilweise sogar von über 75 Metern aufweisen.

Insbesondere während der Dauer des Herstellungsverfahrens der beiden Rotorblatthalbschalen können Gefahrensituationen auftreten, wenn z. B. Feuer ausbricht oder ein Feueralarm ausgelöst wird und Arbeiter sich auf den inneren Laufwegen 2c, 2d aufhalten. Die Entfernung zum tip- oder wurzelseitigen Ende des Laufweges 2c, 2d, an dem sich ein Abstieg auf den Erdboden bzw. Hallenboden befindet, beträgt bis zu 40 Meter und ist damit sehr lang.

Des Weiteren ist insbesondere während des Fertigungsverfahrens der Rotorblatthalbschalen auch eine Flucht von den inneren Laufwegen 2c, 2d über die Herstellungsform 1 gefährlich und meistens unmöglich, weil die Rotorblatthalbschalen bzw. Formhalbschalen 3, 4 zum Einen mindestens bereichsweise geometrisch so geformt sind, dass ein Überqueren schwierig bis unmöglich ist und zum Zweiten, bedingt durch den Fertigungsprozess, mindestens zeitweise die Oberfläche der Rotorblatthalbschalen oder Formhalbschalen 3, 4 eine so hohe Oberflächentemperatur aufweisen, dass eine Überquerung ebenfalls unmöglich ist.

Die Erfindung sieht daher etwa mittig entlang der inneren Laufwege 2c, 2d Personenöffnungen 30, 31 in zumindest einem der inneren Laufwege 2c, 2d, vorzugsweise in beiden inneren Laufwegen 2c, 2d vor, die jeweils groß genug sind, dass ein Arbeiter durch sie hindurchsteigen kann. Die Personenöffnungen 30, 31 weisen daher vorzugsweise eine Öffnungsweite von etwa 50 Zentimetern, vorzugweise 60 Zentimetern oder noch mehr Zentimetern auf. Die Personenöffnungen 30, 31 können rechteckig, quadratisch oder ggf. auch kreisförmig ausgebildet sein. Die Angabe der Öffnungsweite bezieht sich auf den kürzesten Abstand zweier sich gegenüberliegender Randpunkte der Personenöffnungen 30, 31.

Da die Laufwege 2a, 2b, 2c, 2d aus beispielsweise Gerüstplatten, Stahlblechen oder Ähnlichem bestehen, weisen sie günstigerweise ebenfalls eine Breite von etwa 50 - 150 Zentimetern auf, so dass die Personenöffnung 30, 31 in etwa die gesamte Breite eines inneren Laufweges 2c, 2d einnimmt. Daher ist es bevorzugt vorgesehen, die Personenöffnungen 30, 31 während des Herstellungsverfahrens der Rotorblatthalbschalen durch eine Klappe zu verschließen. Dabei kann es sich um eine schwenkbare Klappe, bevorzugt jedoch um eine schiebbare Klappe handeln, die entlang der Horizontalen hin und her verschiebbar ist. Im geschlossenen Zustand ist die Klappe begehbar und mit der gleichen Last belastbar, wie die übrigen Bereich der Laufwege und hält daher insbesondere das Gewicht wenigstens eines Arbeiters und schließt den zugehörigen inneren Laufweg 2c, 2d.

Die Laufwege 2a, 2b, 2c, 2d sind formabseitig in der Regel mit einem Geländer 21a, 21b, 21c, 21d versehen, die Geländer 21c und 21d können aber in den Bereichen weggelassen werden, in denen die Laufwege miteinander verbunden sind, an einem oder beiden inneren Geländern 21c, 21d kann im Bereich der Personenöffnung 30, 31 ein Notschalter 32 vorgesehen sein, der bei Betätigung sofort die Personenöffnung 30, 31 freigibt und die Klappe elektrisch, elektro-mechanisch, hydraulisch, pneumatisch oder durch ein anderes Wirkprinzip zur Seite verschiebt. Es kann aber auch eine rein mechanische Vorrichtung vorhanden sein, die die Personenöffnung 30, 31 freigibt. Unterhalb der Personenöffnung 30, 31 ist eine Treppe oder Leiter 50, 51 oder Rutschstange vorgesehen, über die der Arbeiter im Gefahrenfall den inneren Laufweg 2c, 2d durch die geöffnete Personenöffnung 30, 31 hindurch verlassen kann. Unter mindestens einer der beiden Formhalbschalen 3, 4 ist ein Fluchtweg 40 vorgesehen, über den der Arbeiter dann vom bodenseitigen Ende der Treppe oder Leiter 50, 51 oder Rutschstange unter der Herstellungsform 1 hindurch in die Montagehalle und von dort in den vorgesehenen Sammelbereich flüchten kann. Der mindestens eine Fluchtweg 40 weist einen Ausgang 42 zur Montagehalle auf.

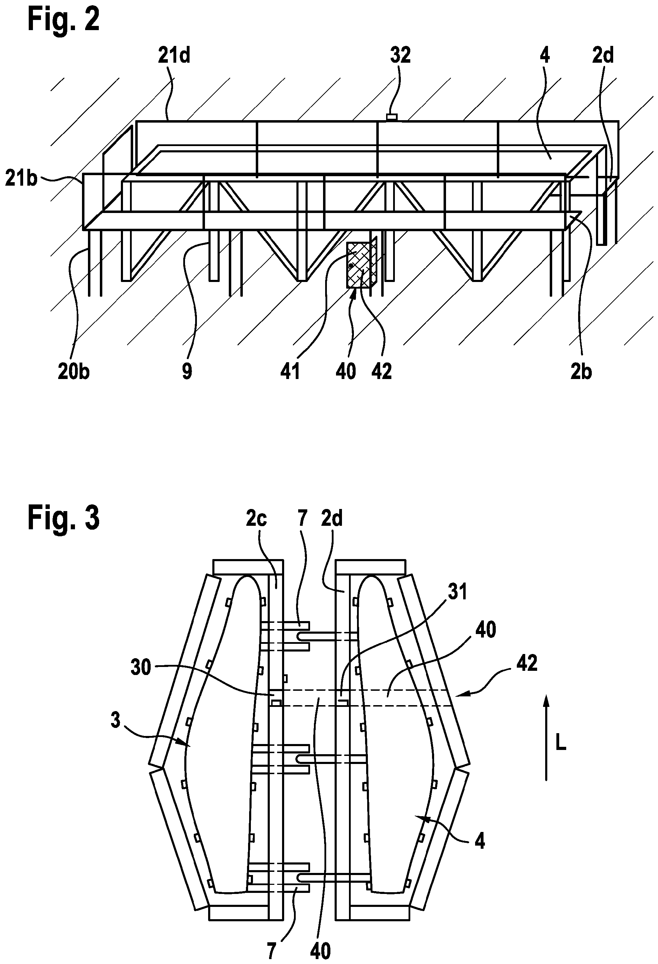

Der Fluchtweg 40 ist, wie in Fig. 2 gezeigt, an seinen Seitenwänden und an der Decke und optional auch an seinem Boden durch eine feuerfeste oder feuerhemmende Verkleidung 41 ausgekleidet oder die Wände, Decke und Boden bestehen aus feuerfesten oder feuerhemmenden Materialien. Der Fluchtweg 40 verbindet vorzugsweise die Personenöffnungen 30, 31 mit der äußeren Längsseite des klappbaren Stahlfachwerkes 9, wobei auch die Möglichkeit eingeschlossen ist, dass der Fluchtweg 40 auch das Laufgestell 2a, 2b durchquert.

Vorzugsweise ist der Fluchtweg 40 unter der klappbaren Formhalbschale 4 langgeführt, die klappbare Formhalbschale 4 weist mittig entlang der Längsrichtung L gesehen im geöffneten Zustand eine deutlich größere Höhe über dem Erdboden auf, als die positionsfeste Formhalbschale 3. Mit Hilfe der klappbaren Formhalbschale 4 wird bevorzugterweise die aerodynamische Druckseite des Rotorblattes hergestellt.

Es hat sich gezeigt, dass die druckseitige Rotorblatthalbschale deutlich einfacher geklappt werden kann als die saugseitige Rotorblatthalbschale, da sie eine größere Beul- und Biegesteifigkeit aufweist, wenn es sich um die Rotorblatthalbschalen für ein vorgebogenes Rotorblatt handelt.

Der Fluchtweg 40, der zweckmäßigerweise die feuerfeste oder feuerhemmende Verkleidung 41 aufweist oder aus feuerfestem oder feuerhemmendem Material besteht, wird in der Regel samt Verkleidung 41 dauerhaft fest mit der klappbaren Unterkonstruktion 9 verbunden und klappt damit beim Zusammenklappen der Herstellungsform 1 ebenfalls mit um. Es ist aber auch möglich, den Fluchtweg 40 samt Verkleidung 41 nicht fest mit der klappbaren Unterkonstruktion 9 zu verbinden, dann verbleibt er auch beim Zuklappen der Formhalbschale 4 am Boden der Montagehalle positioniert.

In Fig. 3 ist die Ansicht der geöffneten Herstellungsform 1 in einer Draufsicht gezeigt. Die beiden Personenöffnungen 30, 31 nebst dem gestrichelt eingezeichneten Fluchtweg 40 sind etwa mittig in Längsrichtung L entlang des inneren Laufweges 2c, 2d entlang der klappbaren Formhalbschale 4 vorgesehen. Die eine Personenöffnung 30 ist entlang des einen inneren Laufweges 2c etwa mittig entlang der positionsfesten Formhalbschale 3 vorgesehen und die andere Personenöffnung 31 ist entlang des anderen inneren Laufweges 2d etwa mittig entlang der klappbaren Formhalbschale 4 vorgesehen. Unterhalb der beiden Personenöffnungen 30, 31 ist jeweils eine Treppe oder Leiter 50, 51 oder Rutschstange vorgesehen Von dem Ausgang 42 des Fluchtwegs 40 bis zu der in Fig. 3 dargestellten anderen Personenöffnung 31, ist der Fluchtweg 40 für beide Personenöffnungen 30, 31 identisch, zwischen der einen Personenöffnung 30 und der anderen Personenöffnung 31 ist ein Stück des Fluchtweges 40 lediglich für die eine Personenöffnung 30 bestimmt.

### Bezugszeichenliste

- 1: Herstellungsform
- 2a: äußerer Laufweg
- 2b: äußerer Laufweg
- 2c: innerer Laufweg
- 2d: innerer Laufweg
- 3: Formhalbschale, positionsfest
- 4: Formhalbschale, klappbar
- 6: Gelenke
- 7: Klappmechanismus
- 8: Stahlfachwerk positionsfest
- 9: Stahlfachwerk klappbar

- 20a: äußeres Laufgestell
- 20b: äußeres Laufgestell
- 20c: inneres Laufgestell
- 20d: inneres Laufgestell
- 21a: äußeres Geländer
- 21b: äußeres Geländer
- 21c: inneres Geländer
- 21d: inneres Geländer

- 30: Personenöffnung
- 31: Personenöffnung
- 32: Notschalter

- 40: Fluchtweg
- 41: Verkleidung
- 42: Ausgang

- 50: Leiter
- 51: Leiter

- L: Längsrichtung

## Patentansprüche

1. Herstellungsform für ein Rotorblatt einer Windenergieanlage mit zwei Formhalbschalen (3, 4), die während eines Herstellungsverfahrens des Rotorblattes mindestens zeitweise nebeneinander stehend angeordnet sind,
und mit wenigstens einem zwischen den beiden Formhalbschalen (3, 4) entlang verlaufenden inneren Laufweg (2c, 2d) und mit wenigstens einem Fluchtweg (40), **dadurch gekennzeichnet, dass** der wenigstens eine Fluchtweg (40) unter mindestens einer der beiden Formhalbschalen (3, 4) entlang verläuft und zwischen den Formhalbschalen (3, 4) mindestens ein Laufgestell (2c, 2d) angeordnet ist, das mindestens eine Personenöffnung (30, 31) aufweist, durch die der wenigstens eine Fluchtweg (40) von dem Laufgestell (2c, 2d) aus erreichbar ist.

2. Herstellungsform nach Anspruch 1,
**dadurch gekennzeichnet, dass** die Formhalbschalen (3, 4) jeweils eine offene Seite aufweisen und jeweils an einer Halteinrichtung (8, 9) angeordnet sind und die beiden Halteeinrichtungen (8, 9) gelenkig miteinander verbunden sind und von einer geöffneten Position, in der die beiden Formhalbschalen (3, 4) mit ihrer offenen Seite nach oben weisend nebeneinander angeordnet sind, in eine geschlossene Position, in der die beiden Formhalbschalen (3, 4) mit ihrer offenen Seite zueinander weisend übereinander angeordnet sind, hin und her klappbar sind, und
der innere Laufweg (2c, 2d) in der geöffneten Position zwischen den beiden Formhalbschalen (3, 4) entlang verläuft.

3. Herstellungsform nach Anspruch 2,
**dadurch gekennzeichnet, dass** der Fluchtweg (40) die wenigstens eine Personenöffnung (30, 31) mit einer äußeren Längsseite einer der beiden Halteeinrichtungen (8, 9) verbindet.

4. Herstellungsform (1) nach Anspruch 2 oder 3,
**dadurch gekennzeichnet, dass** die positionsfeste Formhalbschale (3) während eines Klappens positionsfest auf dem Boden verbleibt und die klappbare Formhalbschale (4) aus der geöffneten Position in die geschlossene Position klappbar ist, während der Fluchtweg (40) unter der klappbaren Formhalbschale (4) hindurchgeführt ist.

5. Herstellungsform (1) nach Anspruch 4,
**dadurch gekennzeichnet, dass** die positionsfeste Formhalbschale (3) auf einer positionsfesten Halteeinrichtung und die klappbare Formhalbschale (4) auf einer klappbaren Halteeinrichtung angeordnet ist und die positionsfeste Halteeinrichtung und/oder die klappbare Halteeinrichtung jeweils als Stahlfachwerk (8, 9) ausgebildet sind.

6. Herstellungsform (1) nach einem der vorstehenden Ansprüche,
**dadurch gekennzeichnet, dass** die wenigstens eine Personenöffnung (30, 31) mit einer Abdeckung verschließbar ist und die Abdeckung eine geschlossene Position aufweist, in der sie begehbar ist und eine geöffnete Position aufweist, in der der Fluchtweg (40) z. B. über eine Leiter (50, 51) oder Treppe oder Rutschstange erreichbar ist.

7. Herstellungsform (1) nach Anspruch 6,
**dadurch gekennzeichnet, dass** die Abdeckung der wenigstens eine Personenöffnung (30, 31) eine Schiebeklappe ist.

8. Herstellungsform (1) nach Anspruch 6 oder 7,
**dadurch gekennzeichnet, dass** die Abdeckung der wenigstens einen Personenöffnung (30, 31) durch einen Notschalter (32) bedienbar ist, der auf Griffhöhe neben der wenigstens einen Personenöffnung (30, 31) angeordnet ist.

9. Herstellungsform (1) nach Anspruch 6, 7 oder 8,
**dadurch gekennzeichnet, dass** die Abdeckung der wenigstens einen Personenöffnung (30, 31) durch eine Mechanik, z. B. eine Kurbel oder einen Pumphebelbedienbar ist, die auf Griffhöhe neben der wenigstens einen Personenöffnung (30, 31) angeordnet ist.

10. Herstellungsform (1) nach einem der vorstehenden Ansprüche,
**dadurch gekennzeichnet, dass** entlang jeder der einander zugewandten Längsseiten der Formhalbschalen (3, 4) ein innerer Laufweg (2c, 2d) angeordnet ist und jeder der beiden inneren Laufwege (2c, 2d) jeweils eine der Personenöffnungen (30, 31) aufweist.

11. Herstellungsform (1) nach Anspruch 10,
**dadurch gekennzeichnet, dass** jede der beiden Personenöffnungen (30, 31) mit demselben Fluchtweg (40) begehbar verbunden sind.

12. Herstellungsform (1) nach einem der vorstehenden Ansprüche,
**dadurch gekennzeichnet, dass** Seitenwände und/oder Böden und/oder Decken des Fluchtweges (40) aus einem feuerfesten oder feuerhemmenden Material bestehen.

13. Herstellungsform (1) nach einem der vorstehenden Ansprüche,
**dadurch gekennzeichnet, dass** Seitenwände und /oder Böden und /oder Decken des Fluchtweges (40) mit einer feuerfesten oder feuerhemmenden Verkleidung (41) ausgekleidet sind.

14. Herstellungsform (1) nach einem der vorstehenden Ansprüche,
**dadurch gekennzeichnet, dass** entlang äußerer Längsseiten der Formhalbschalen (3, 4) Laufgestelle 2a und / oder 2b angeordnet sind und der Fluchtweg (40) auch durch die Laufgestelle (2a, 2b) hindurch verlängert ist.

15. Herstellungsform (1) nach einem der vorstehenden Ansprüche,
**dadurch gekennzeichnet, dass** die Laufwege (2a, 2b, 2c, 2d) als aneinandergelegte Platten ausgebildet sind, die auf Laufgestellen (20a, 20b, 20c, 20d) montiert sind.

## Claims

1. Production mold for a rotor blade of a wind turbine plant, having two mold half-shells (3, 4) which during a production method of the rotor blade are disposed so as to be at least temporarily beside one another, and having at least one inner walkway (2c, 2d) that runs along so as to be between the two mold half-shells (3, 4) and with at least one escape path,
**characterized by that** the at least one escape path (40) runs along below at least one of the two mold half-shells (3, 4) and at least one walkway frame (2c, 2d) which has at least one operator opening (30, 31) through which the escape path (40) is reachable from the walkway frame (2c, 2d) is disposed between the two mold half-shells.

2. Production mold according to Claim 1,
**characterized in that** the mold half-shells (3, 4) have in each case one open side and are in each case disposed on a mounting installation (8, 9), and the two mounting installations (8, 9) are interconnected in an articulated manner and are foldable in a reciprocating manner from an opened position in which the two mold half-shells (3, 4), the open sides thereof facing upward, are disposed beside one another, to a closed position in which the two mold half-shells (3, 4), the open sides thereof facing one another, are disposed on top of one another, and the inner walkway (2c, 2d) in the opened position runs along between the two mold half-shells (3, 4).

3. Production mold according to Claim 2,
**characterized in that** the escape path (40) connects the at least one operator opening (30, 31) to an outer longitudinal side of one of the two mounting installations (8, 9).

4. Production mold (1) according to Claim 2 or 3,
**characterized in that** the positionally fixed mold half-shell (3) during a folding remains so as to be positionally fixed on the ground, and the foldable mold half-shell (4) is foldable from the opened position to the closed position, while the escape path (40) is routed below the foldable mold half-shell (4).

5. Production mold (1) according to Claim 4,
**characterized in that** the positionally fixed mold half-shell (3) is disposed on a positionally fixed mounting installation, and the foldable mold half-shell (4) is disposed on a foldable mounting installation, and the positionally fixed mounting installation and/or the foldable mounting installation are/is in each case configured as a steel framework (8, 9).

6. Production mold (1) according to one of the preceding claims,
**characterized in that** the at least one operator opening (30, 31) with a cover is lockable, and the cover has a closed position in which said cover is passable, and has an opened position in which the escape path (40) is accessible by way of a ladder (50, 51) or a stairway or a sliding pole, for example.

7. Production mold (1) according to Claim 6,
**characterized in that** the cover of the at least one operator opening (30, 31) is a sliding hatch.

8. Production mold (1) according to Claim 6 or 7,
**characterized in that** the cover of the at least one operator opening (30, 31) is operable by way of an emergency switch (32) which is disposed at gripping height beside the at least one operator opening (30, 31).

9. Production mold (1) according to Claim 6, 7 or 8,
**characterized in that** the cover of the at least one operator opening (30, 31) is operable by way of a mechanism, for example a crank or a pump lever, which is disposed at gripping level beside the at least one operator opening (30, 31).

10. Production mold (1) according to one of the preceding claims,
**characterized in that** an inner walkway (2c, 2d) is disposed along each of the mutually facing longitudinal sides of the mold half-shells (3, 4), and each of the two inner walkways (2c, 2d) has in each case one operator opening (30, 31).

11. Production mold (1) according to Claim 9,
**characterized in that** each of the two operator openings (30, 31) is connected in a passable manner to the same escape path (40).

12. Production mold (1) according to one of the preceding claims,
**characterized in that** side walls and/or floors and/or ceilings of the escape path (40) are composed of a fireproof or fire-retardant material.

13. Production mold (1) according to one of the preceding claims,
**characterized in that** side walls and/or floors and/or ceilings of the escape path (40) are cladded with a fireproof or fire-retardant cladding (41).

14. Production mold (1) according to one of the preceding claims,
**characterized in that** walkway frames 2a and/or 2b are disposed along outer longitudinal sides of the mold half-shells (3, 4), and the escape path (40) is continued also through the walkway frames (2a, 2b).

15. Production mold (1) according to one of the preceding claims,
**characterized in that** the walkways (2a, 2b, 2c, 2d) are configured as abutting tiles which are fitted onto walkway frames (20a, 20b, 20c, 20d).

## Revendications

1. Moule de fabrication pour une pale de rotor d'une éolienne avec deux demies coques de moule (3, 4) qui sont placées, pendant un procédé de fabrication de la pale de rotor, au moins temporairement debout l'une à côté de l'autre et avec au moins un chemin intérieur (2c, 2d) qui passe le long entre les deux demies coques de moule (3, 4) et avec au moins une issue de secours (40), **caractérisé en ce que** la au moins une issue de secours (40) passe le long en dessous d'au moins l'une des deux demies coques de moule (3, 4) et qu'au moins un bogie (2c, 2d) est placé entre les deux demies coques de moule (3, 4), bogie qui présente au moins une ouverture pour personnes (30, 31) par laquelle la au moins une issue de secours (40) peut être atteinte à partir du bogie (2c, 2d).

2. Moule de fabrication selon la revendication 1, **caractérisé en ce que** les demies coques de moule (3, 4) présentent chacune un côté ouvert et sont placées chacune sur un dispositif de maintien (8, 9) et que les deux dispositifs de maintien (8, 9) sont reliés de manière articulée l'un à l'autre et sont rabattables en va-et-vient d'une position ouverte dans laquelle les deux demies coques de moule (3, 4) sont placées l'une à côté de l'autre avec leur côté ouvert tourné vers le haut à une position fermée dans laquelle les deux demies coques de moule (3, 4) sont placées l'une au-dessus de l'autre avec leur côté ouvert tourné l'un vers l'autre et que le chemin intérieur (2c, 2d) passe, dans la position ouverte, le long entre les deux demies coques de moule (3, 4).

3. Moule de fabrication selon la revendication 2, **caractérisé en ce que** l'issue de secours (40) relie la au moins une ouverture pour personnes (30, 31) à un côté longitudinal extérieur de l'un des deux dispositifs de maintien (8, 9).

4. Moule de fabrication (1) selon la revendication 2 ou 3, **caractérisé en ce que** la demie-coque de moule en position fixe (3) reste en position fixe sur le sol pendant un rabattement et que la demie coque rabattable (4) peut être rabattue de la position ouverte à la position fermée pendant que l'issue de secours (40) traverse sous la demie coque rabattable (4).

5. Moule de fabrication (1) selon la revendication 4, **caractérisé en ce que** la demie-coque de moule en position fixe (3) est placée sur un dispositif de maintien fixe en position et la demie coque rabattable de moule (4) sur un dispositif de maintien rabattable et le dispositif de maintien fixe en position et/ou le dispositif de maintien rabattable sont configurés chacun comme un treillis en acier (8, 9).

6. Moule de fabrication (1) selon l'une des revendications précédentes, **caractérisé en ce que** la au moins une ouverture pour personnes (30, 31) peut être fermée avec un couvercle et le couvercle présente une position fermée dans laquelle on peut marcher dessus et une position ouverte dans laquelle l'issue de secours (40) est accessible par exemple par une échelle (50, 51) ou un escalier ou une perche de pompier.

7. Moule de fabrication (1) selon la revendication 6, **caractérisé en ce que** le couvercle de la au moins une ouverture pour personnes (30, 31) est une trappe coulissante.

8. Moule de fabrication (1) selon la revendication 6 ou 7, **caractérisé en ce que** le couvercle de la au moins une ouverture pour personnes (30, 31) peut être manoeuvré par un interrupteur d'urgence (32) qui est placé au niveau de la poignée à côté de la au moins une ouverture pour personnes (30, 31).

9. Moule de fabrication (1) selon la revendication 6, 7 ou 8, **caractérisé en ce que** le couvercle de la au moins une ouverture pour personnes (30, 31) peut être manoeuvré par un mécanisme, par exemple une manivelle ou un levier de pompe, qui est placé au niveau de la poignée à côté de la au moins une ouverture pour personnes (30, 31).

10. Moule de fabrication (1) selon l'une des revendications précédentes, **caractérisé en ce qu'**un chemin intérieur (2c, 2d) est placé le long de chacun des côtés longitudinaux tournés l'un vers l'autre des demies coques de moule (3, 4) et que chacun des deux chemins intérieurs (2c, 2d) présente chacun l'une des ouvertures pour personnes (30, 31).

11. Moule de fabrication (1) selon la revendication 10, **caractérisé en ce que** chacune des deux ouvertures pour personnes (30, 31) est reliée en étant praticable à la même issue de secours (40).

12. Moule de fabrication (1) selon l'une des revendications précédentes, **caractérisé en ce que** des parois latérales et/ou des fonds et/ou des plafonds de l'issue de secours (40) sont en un matériau réfractaire ou ignifuge.

13. Moule de fabrication (1) selon l'une des revendications précédentes, **caractérisé en ce que** des parois latérales et/ou des fonds et/ou des plafonds de l'issue de secours (40) sont revêtus d'un revêtement réfractaire ou ignifuge (41).

14. Moule de fabrication (1) selon l'une des revendications précédentes, **caractérisé en ce que** des bogies 2a et/ou 2b sont placés le long des côtés longitudinaux extérieurs des demies coques de moule (3, 4) et que l'issue de secours (40) est prolongée également à travers les bogies (2a, 2b).

15. Moule de fabrication (1) selon l'une des revendications précédentes, **caractérisé en ce que** les chemins (2a, 2b, 2c, 2d) sont configurés comme des plaques aboutées qui sont montées sur des bogies (20a, 20b, 20c, 20d).
